# EUROPÄISCHE PATENTSCHRIFT

(11) **EP 2 032 418 B1**
(45) Veröffentlichungstag und Bekanntmachung des Hinweises auf die Patenterteilung: **21.07.2010**
(21) Anmeldenummer: 07728933.8
(22) Anmeldetag: 09.05.2007
(51) Int. Cl.: B62D 15/02, B60T 7/12

(54) **STEUERGERÄT UND VERFAHREN ZUR FAHRERUNTERSTÜTZUNG**
CONTROL UNIT AND METHOD FOR DRIVER ASSISTANCE
APPAREIL DE COMMANDE ET PROCEDE D'ASSISTANCE AU CONDUCTEUR

(30) Priorität: 12.06.2006 DE 102006027114
(43) Veröffentlichungstag der Anmeldung: 11.03.2009
(73) Patentinhaber: Robert Bosch GmbH, 70442 Stuttgart (DE)
(72) Erfinder: BRAEGAS, Peter, 31141 Hildesheim-Itzum (DE)
(86) Internationale Anmeldenummer: PCT/EP2007/054481
(87) Internationale Veröffentlichungsnummer: WO 2007/144238

(56) Entgegenhaltungen:
- EP-A- 1 623 912
- EP-A- 1 626 384
- EP-A1- 1 123 844
- WO-A-2005/014371
- DE-A1- 10 105 749
- DE-A1-102004 055 584
- FR-A1- 2 785 383

## Beschreibung

### Stand der Technik

Die Erfindung geht aus von einem Steuergerät oder einem Verfahren nach Gattung der unabhängigen Ansprüche. Aus der DE 102 20 426 A1 ist bereits ein Verfahren zum Betreiben eines Parkhilfesystems und ein Parkhilfesystem bekannt, bei dem eine Parklücke der Länge und/oder der Breite nach bei einem Vorbeifahren an der Parklücke bestimmt wird und bei dem ein Einparkablauf für das Fahrzeug in die Parklücke bestimmt wird. Der Fahrzeuglenker wird nun angewiesen, in welche Richtung er das Fahrzeug zu bewegen hat und wie weit das Lenkrad einzuschlagen ist. Während des Einparkens wird das Fahrzeug dabei automatisch abgebremst bzw. beschleunigt. Ferner sind auch Parkhilfesysteme bekannt, bei denen der Fahrer Anweisungen erhält, das Fahrzeug selbst abzubremsen bzw. zu beschleunigen.

Weiterhin ist aus der gattungsbildenden FR-A-2785383 ein Steuergerät für eine Fahrunterstützung eines Fahrzeugs bekannt, das es gestattet, einen Einparkvorgang in verschiedene Etappen aufzuteilen, wobei in jedem Etappenpunkt ein automatisches Abbremsen des Fahrzeugs über eine Ansteuerung der Bremse stattfindet, gefolgt von einem Einschlag des Lenkrads. Darüber hinaus ist aus der WO 2005/014371 A ein Steuergerät für eine Fahrerunterstützung, insbesondere für einen Einparkvorgang, bekannt, bei dem eine Referenztrajektorie berechnet wird, die einen bestimmten Lenkwinkel erfordert. Sobald die Abweichung des tatsächlichen Lenkwinkels von diesem vorgegebenen Lenkwinkel ein bestimmtes Maß übersteigt, wird automatisch die Bremse betätigt. Auch aus der EP-A-1623912 ist eine Einparkhilfe für ein Kraftfahrzeug sowie ein Verfahren zur Unterstützung eines Kraftfahrzeugbenutzers beim Einparken eines Kraftfahrzeugs bekannt, bei der mittels einer Einpark-Assistenzeinrichtung dem Kraftfahrzeugbenutzer ein berechneter Einpark-Fahrvorgang durch Vorgabe der erforderlichen Fahr- und/oder Lenkmanöver angezeigt wird und dieser mittels Auswahlmittel einen auf die Anforderung des Kraftfahrzeugbenutzers angepassten personalisierten Betriebsmodus auswählen kann.

### Offenbarung der Erfindung

### Vorteile der Erfindung

Das erfindungsgemäße Steuergerät für eine Fahrunterstützung mit den Merkmalen des Anspruchs 1 hat demgegenüber den Vorteil, dass einerseits der Eingriff in den Antriebsstrang des Fahrzeugs und in das Bremssystem einfach gehalten werden kann und andererseits ein Lenkvorgang, den der Fahrer ausführen muss, sicher durchgeführt wird. Denn eine Bremsung des Fahrzeugs erfolgt dann, wenn der Fahrer einen Lenkeinschlag vornehmen muss. Bis zum Abschluss des Lenkeinschlags wird das Fahrzeug gebremst, sodass der Lenkeinschlag bei stehendem Fahrzeug durchgeführt wird. Anschließend kann der Fahrer das Fahrzeug mit dem nunmehr korrekt eingeschlagenen Lenkwinkel selbst weiterführen. Somit werden dem Fahrer nicht nur Ausweisungen ausgegeben, sondern es wird auch sichergestellt, dass das Fahrzeug mit einem der gegebenen Lenkanweisung entsprechenden Lenkwinkel bewegt wird.

Durch die in den abhängigen Ansprüchen aufgeführten Maßnahmen sind vorteilhafte Weiterbildungen und Verbesserungen des im Anspruch 1 angegebenen Steuergeräts möglich. Besonders vorteilhaft ist es, dem Fahrer des Fahrzeugs die Möglichkeit zu geben, über eine entsprechende Schnittstelle die Blockierung der Bremse auch dann aufzuheben, wenn der ihm angegebene Lenkwinkel noch nicht eingestellt wurde. Dies ist insbesondere dann vorteilhaft, wenn der Fahrer sein Fahrziel geändert hat und er nunmehr beispielsweise eine Parklücke wieder verlassen möchte oder einen anderen Fahrweg wählen will.

Die Erfindung sieht vor, eine Bremsung der Räder des Fahrzeugs erst dann durchzuführen, wenn das Fahrzeug bereits steht. Hierdurch wird ein überraschendes Bremsen des Fahrzeugs vermieden, mit dem der Fahrer oder gegebenenfalls nachfolgender Verkehr nicht rechnet. Ein ungewolltes Wegrollen des Fahrzeugs während des Einparkvorgangs oder ein versehentliches Losfahren des Fahrers bei noch nicht korrekt eingeschlagenem Lenkwinkel wird jedoch trotzdem verhindert.

Ferner ist es vorteilhaft, dem Fahrer eine Warnung dann auszugeben, wenn die Bremse gelöst wird. Insbesondere für den Fall, dass der Fahrer an einem Hang einparkt, kann er somit auf die gelöste, automatische Festbremsung des Fahrzeugs reagieren und selbständig wieder die Bremsung bzw. die Beschleunigung des Fahrzeugs übernehmen.

Besonders vorteilhaft ist es, das erfindungsgemäße Steuergerät für eine Fahrunterstützung für ein Einparken des Fahrzeugs zu verwenden. Denn insbesondere bei einem Einparkvorgang ist es oftmals erforderlich, im Stand zu lenken, um die meist recht knappen Einparkflächen optimal ausnutzen zu können. Vor diesem Hintergrund ist es vorteilhaft, das erfindungsgemäße Steuergerät in einer Einparkvornchtung für ein Fahrzeug zu verwenden.

Ferner ist ein erfindungsgemäßes Verfahren mit den Merkmalen des nebengeordneten Anspruchs zur Fahrunterstützung vorteilhaft, bei dem eine Bremseinrichtung erst dann gelöst wird, wenn während einer im Stand durchzuführenden Lenkung ein vorgegebener Lenkwinkel erreicht wird. Ein Wegrollen des Fahrzeugs bzw. ein Fahren des Fahrzeugs mit einem falschen Lenkwinkel, der nicht auf die gewünschte Zielposition des Fahrzeugs führt, insbesondere in eine Parklücke, wird hiermit vermieden.

### Kurze Beschreibung der Zeichnungen

Ausführungsbeispiele der Erfindung sind in den Zeichnungen dargestellt und in der nachfolgenden Beschreibung näher erläutert. Es zeigen Figur 1 eine schematische Aufsicht auf ein Fahrzeug mit einem Ausführungsbeispiel für ein erfindungsgemäßes Steuergerät einer Einparkvorrichtung, Figur 2 ein schematischer Ablauf eines erfindungsgemäßen Verfahrens bei einem Einparkvorgang, Figur 3 ein Ausführungsbeispiel für einen erfindungsgemäßen Verfahrensablauf.

### Ausführungsformen der Erfindung

Die vorliegende Erfindung kann für beliebige Fahrzeuge verwendet werden, ist aber insbesondere vorteilhaft für Fahrzeuge, die sich frei in einem Straßenverkehrsnetz bewegen können. Aufgrund heute üblicher hoher Verkehrsdichte muss ein Fahrer sein Fahrzeug im Straßenverkehr sehr genau bewegen. Insbesondere ist es erforderlich, oftmals recht knappen Parkraum ausnutzen zu können, um ein Fahrzeug im Straßenverkehr abstellen zu können. Daher wird im Folgenden das erfindungsgemäße Steuergerät am Beispiel einer Verwendung in einem Kraftfahrzeug für einen Einparkvorgang erläutert.

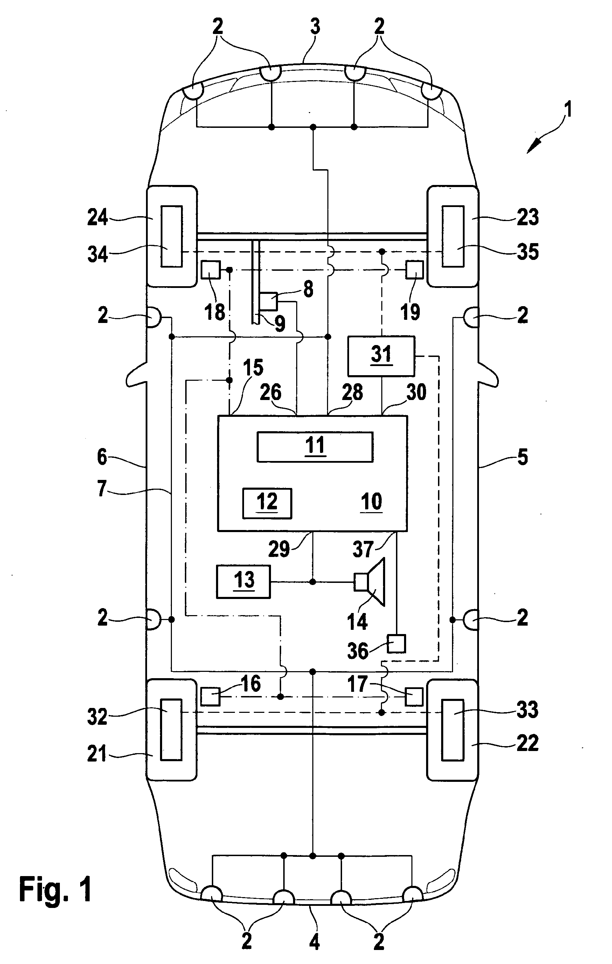

Figur 1 zeigt ein Kraftfahrzeug 1, das schematisch in einer Aufsicht dargestellt ist. Das Kraftfahrzeug verfügt über Abstandssensoren 2. In der hier gezeigten Konfiguration sind vier Abstandssensoren 2 an einer Vorderseite 3 des Fahrzeugs und vier Abstandssensoren 2 an einer Rückseite 4 des Fahrzeugs angeordnet. Ferner sind an einer rechten Seite 5 des Fahrzeugs und an einer linken Seite 6 des Fahrzeugs jeweils zwei Abstandssensoren angeordnet. Bevorzugt sind die Abstandssensoren 2 als Ultraschallsensoren ausgeführt. In diesem Fall senden die Abstandssensoren 2 ein Ultraschallsignal aus, das von einem Hindernis reflektiert wird. Aus der Laufzeit des Schallsignals kann ein Abstand zu dem Hindernis berechnet werden. Hierzu sind die Abstandssensoren 2 mit einem Steuergerät 10 über einen Datenbus 7 verbunden, der über eine Datenschnittstelle 28 an das Steuergerät 10 angeschlossen ist. Das Steuergerät 10 verfügt über eine Recheneinheit 11, die eine Auswertung der Abstandsdaten vornimmt. In einer anderen Ausführungsform können anstelle von Ultraschallsensoren auch andere Abstandsensoren, wie beispielsweise optische Sensoren oder Radarsensoren, zur Abstandsmessung eingesetzt werden.

Die Recheneinheit 11 ist dabei ausgelegt, um aus den gemessenen Abstandsdaten ein Umgebungsmodell zu berechnen und somit eine Hinderniskarte der Umgebung des Fahrzeugs 1 zu bestimmen. Ferner ist die Recheneinheit 11 dazu ausgelegt, einen Fahrweg des Fahrzeugs um erfasste Hindernisse herum zu bestimmen. So ist es beispielsweise möglich, mit den an der rechten Seite 5 des Fahrzeugs 1 angeordneten Abstandssensoren 2 die Länge einer Parklücke zu vermessen, die Position der die Parklücke begrenzenden Hindernisse zu bestimmen und einen Fahrweg des Fahrzeugs 1 in diese Parklücke zu berechnen. Hierbei werden bevorzugt die in einem Speicher 12 des Steuergeräts 10 abgelegten Abmaße des Fahrzeugs für die Berechnung berücksichtigt. Um das Fahrzeug in die Parklücke zu lenken werden dem Fahrer über eine optische Anzeige 13 und/oder über eine akustische Ausgabeeinheit 14 Anweisungen ausgegeben. Die optische Anzeige 13 und/oder die akustische Ausgabeeinheit 14 sind über eine Datenschnittstelle 29 an das Steuergerät 10 angeschlossen. Die ausgegebenen Fahranweisungen können einerseits ein Vor- bzw. Rückwärtsfahren des Fahrzeugs, aber auch Lenkanweisungen beinhalten. Da die Wirkung einer Lenkraddrehung während einer Fahrt davon abhängig ist, mit welcher Geschwindigkeit sich das Fahrzeug bewegt, ist es besonders einfach, das Vorwärts- und Rückwärtsfahren mit einem bestimmten eingeschlagenen Lenkwinkel einerseits und das Einschlagen der Lenkung auf einen geeigneten Lenkwinkel andererseits zu trennen. So wird entweder mit einem bestimmten, festen Lenkwinkel gefahren oder es wird im Stand das Lenkrad gedreht. Hierdurch ist es für einen Fahrer besonders einfach möglich, den von dem Steuergerät 10 bestimmten Lenkanweisungen und Fahranweisungen Folge zu leisten.

Während der Fahrt können die Abstände zu den Hindernissen in der Umgebung des Fahrzeugs 1 durch die Abstandssensoren 2 weiter überwacht werden. Nähert sich das Fahrzeug 1 einem Hindernis zu sehr an, können über die Anzeige 13 bzw. die akustische Ausgabeeinheit 14 Warnungen an den Fahrer ausgegeben werden.

Besonders einfach kann der Fahrer den Lenkanweisungen dann folgen, wenn ein Vollausschlag der Lenkung nach links, ein Vollausschlag nach rechts bzw. eine Geradeausfahrt von ihm verlangt wird. Zur Kontrolle, ob ein gewünschter Lenkwinkel vom Fahrer auch eingeschlagen wurde, ist das Steuergerät 10 über eine Datenschnittstelle 26 mit einem Lenkwinkelsensor 8 verbunden, der beispielsweise eine Winkelposition einer Lenkachse 9 des Fahrzeugs ermittelt. Um festzustellen, ob das Fahrzeug bei einer Durchführung einer Lenkung tatsächlich steht, ist das Steuergerät 10 über eine Datenschnittstelle 15 mit Radsensoren 16, 17, 18, 19 verbunden, wobei die Radsensoren die einzelnen Räder 21, 22, 23, 24 des Fahrzeugs überwachen. Hierbei können beispielsweise Radsensoren 16, 17, 18, 19 eines ABS-Systems genutzt werden, die eine Radbewegung bzw. einen Stillstand der Räder melden.

Ferner weist das Steuergerät 10 eine Datenschnittstelle 30 auf, die mit einer Ansteuervorrichtung 31 zur Steuerung eines Bremssystems des Fahrzeugs verbunden ist. Die Ansteuerungsvorrichtung des Bremssystems kann dabei über einen gestrichelt eingezeichneten Datenbus mit Bremseinrichtungen 32, 33 der Hinderräder 21, 22 und/oder mit Bremseinrichtungen 34, 35 der Vorderräder zusammenwirken. Die Bremseinrichtungen 32, 33, 34, 35 können in einer ersten Ausführungsform als herkömmliche Bremsen des Fahrzeugs, insbesondere als Scheibenbremsen, ausgeführt sein, die einer Verzögerung des Fahrzeugs während des Fahrbetriebs dienen. In einer weiteren Ausführungsform können jedoch auch Bremseinrichtungen einer Feststellbremse verwendet werden, die im Allgemeinen dazu verwendet wird, ein unbeabsichtigtes Wegrollen des Fahrzeugs bei geparktem Fahrzeug zu verhindern.

Die Datenschnittstellen 15, 26, 28, 29, 30, 37 können jeweils als einzelne Datenschnittstellen an dem Steuergerät 10 angeordnet sein. In einer weiteren Ausführungsform ist es jedoch auch möglich, bestimmte Datenschnittstellen über einen Datenbus zusammenzufassen. So ist es beispielsweise möglich, die Ansteuerungssignale an die Bremseinrichtung einerseits sowie die Sensordaten andererseits über einen so genannten CAN-Bus (Controller Area Network) an das Steuergerät 10 zu übertragen. Die Abfrage des Bedienelements 36 und die Ausgabe von Informationen an die Ausgabeeinrichtungen 13, 14 können beispielsweise über einen LIN-Bus erfolgen. Die Sensoren 2 können über einen geeigneten Sensordatenbus an das Steuergerät 10 Daten übermitteln. Das Steuergerät weist bevorzugt geeignete Steckkontakte jeweils mit entsprechender Eingangsbeschaltung auf, die die Datenschnittstellen bilden. Entsprechend können auch zugehörige Bustreiber oder Datenbusschnittstellen an der Datenschnittstelle vorgesehen sein, die eine Kommunikation mit den Datenübertragungs-Bussystemen ermöglichen.

Das Steuergerät 10 selbst kann an einer beliebigen Stelle im Fahrzeug angeordnet sein. Da das Steuergerät 10 selbst nicht in Reichweite eines Benutzers liegen muss, ist insbesondere eine Anordnung entweder im Motorraum, aber auch in einem für einen Fahrer nicht direkt zugänglichen Bereich der Instrumententafel möglich.

Das Steuergerät 10 ist bevorzugt für die Verwendung in verschiedenen Fahrzeugen ausgelegt, wobei die jeweils zugehörigen Fahrzeugdaten über eine in der Figur 1 nicht gezeigte Schnittstelle in den Speicher 12 geschrieben werden können. Alternativ ist es auch möglich, einen entsprechenden, austauschbaren Speicherbaustein für den Speicher 12 vorzusehen, so dass jeweils ein Speicherbaustein mit entsprechenden Fahrzeugdaten vor dem Einbau des Steuergeräts 10 in ein Fahrzeug in das Steuergerät 10 eingesetzt wird.

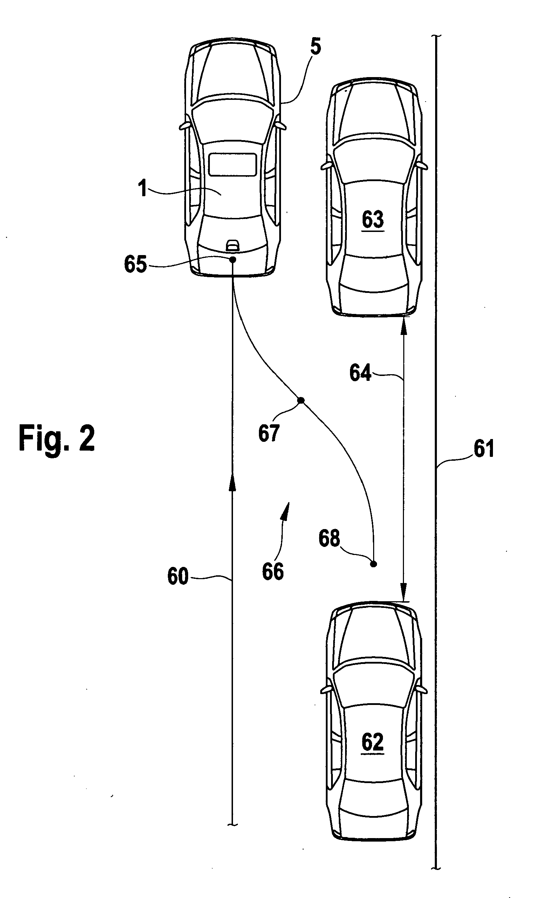

Die Funktionsweise des erfindungsgemäßen Steuergeräts und der erfindungsgemäßen Einparkvorrichtung wird im Folgenden anhand des Fahrbeispiels gemäß der Figur 2 erläutert. Das Kraftfahrzeug 1 ist entlang seiner Fahrstrecke in Pfeilrichtung 60 entlang eines Straßenrandes 61 gefahren. Dabei wurden die an der rechten Seite 5 des Fahrzeugs angeordneten Abstandssensoren aktiviert. Die Sensoren vermessen einen seitlichen Abstand des Fahrzeugs zu Hindernissen und haben bei einer Vorbeifahrt die Position eines ersten Fahrzeugs 62 und eines zweiten Fahrzeugs 63 ermittelt, die an dem Straßenrand 61 geparkt sind. Ferner wurde durch die Auswertung der Abstandsdaten von dem Steuergerät auch eine Parklücke 64 zwischen dem ersten Fahrzeug 62 und dem zweiten Fahrzeug 63 ermittelt, die ausreichend groß für das Kraftfahrzeug 1 ist. Über die Anzeige 13 und/oder die akustische Ausgabeeinheit 14 wird nun dem Fahrer der Hinweis ausgegeben anzuhalten, um in die Parklücke 64 einzuparken. Der Fahrer hält das Fahrzeug an der Position eines ersten Umlenkpunkts 65 an, wobei als Position des Fahrzeugs in der Figur 2 die Mittelposition der Hinderachse stellvertretend in die Zeichnung eingetragen wird. Um nun in die Parklücke 64 einzuparken, muss der Fahrer das Lenkrad zunächst geeignet nach rechts einschlagen. Dieser Befehl wird dem Fahrer ebenfalls über die Anzeige 13 bzw. die akustische Ausgabeeinheit 14 ausgegeben. Ferner wird gegebenenfalls ausgegeben, die Lenkung im Stand durchzuführen. Das Steuergerät 10, das mittels der Recheneinheit 11 einen Fahrweg 66 in die Parklücke bestimmt hat, hat für die Einfahrt in die Parklücke feste Umlenkpunkte festgelegt, wie beispielsweise den ersten Umlenkpunkt 65. Während des Fahrwegs 66 wird bis auf die Umlenkpunkte der eingeschlagene Lenkwinkel vom Fahrer jeweils ungefähr konstant gehalten, um eine leichtere Reproduzierbarkeit des empfohlenen Fahrwegs durch den Fahrer zu ermöglichen. Lenkvorgänge, d. h. Änderungen des jeweils eingeschlagenen Lenkwinkels, finden nur an den Umlenkpunkten statt. In dem ersten Umlenkpunkt 65 wird dabei dem Fahrer beispielsweise die Anweisung ausgegeben, einen Vollausschlag der Lenkung nach rechts durchzuführen. Eine Anweisung eines Vollausschlags hat gegenüber anderen Winkeln den Vorteil, dass ein Vollausschlag durch den Lenkanschlag eindeutig definiert wird. Somit kann ein Fahrer ein Erreichen eines Vollausschlags auch selbst überprüfen.

Nachdem das Fahrzeug die Position des ersten Umlenkpunktes 65 erreicht hat, wird mittels der Radsensoren 18, 19, 16, 17 zunächst überprüft, ob das Fahrzeug steht. Ist dies der Fall, so werden 34, 35 der Vorderachse und/oder die Bremseinrichtungen 32, 33 der Hinterachse von dem Steuergerät 10 über die Bremsenansteuerung 31 aktiviert. Der Fahrer kann nun nach Ausgabe des Lenkhinweises im Stand in die ihm geratene Richtung lenken. Eine Lenkung im Stand ist auch dann möglich, wenn sich das Fahrzeug an einem Hang befindet und der Fahrer die Bremse nicht selbst betätigt.

Der aktuell eingeschlagene Lenkwinkel wird mittels des Lenkwinkelsensors 8 überprüft. Die Bremseinrichtungen 32, 33 und/oder 34, 35 werden erst dann gelöst, wenn der Fahrer einen vorgegebenen Lenkwinkel erreicht hat, der von dem Steuergerät 10 bzw. der Recheneinheit 11 bestimmt wurde. In dem Ausführungsbeispiel gemäß der Figur 2 wäre ein solcher Lenkwinkel ein Volleinschlag nach rechts, wobei ein Toleranzbereich von beispielsweise einer zehntel Lenkraddrehung vorgesehen sein kann. Ist der gewünschte Lenkwinkel erreicht, so werden die Bremseinrichtungen 32, 33 und/oder 34, 35 nach Anforderung des Steuergerätes über die Datenschnittstelle 30 an das Bremsensteuergerät 31 automatisch gelöst. Bevorzugt wird dem Fahrer eine optische und/oder akustische Warnung über die Ausgabeeinheiten 13, 14 ausgegeben, dass die Bremsen gelöst werden. Bevorzugt wird dem Fahrer auch ausgegeben, in welcher Richtung - also vorwärts oder rückwärts - er das Fahrzeug nun steuern soll. Insbesondere durch die Warnausgabe wird einerseits verhindert, dass der Fahrer von dem automatischen Lösen der Bremse überrascht wird. Andererseits wird auch erreicht, dass der Fahrer über ein Erreichen des vorgegebenen Winkels informiert wird, um seine Fahrt in die Parklücke zügig fortzusetzen. Entsprechend kann die Warnung auch geringfügig vor dem automatischen Lösen der Bremsen, beispielsweise eine Sekunde vorher, ausgegeben werden. Der Fahrer kann nun seine Fahrt mit dem eingeschlagenen Lenkwinkel bis zu dem zweiten Umlenkpunkt 67 zunächst fortsetzen. Ergänzend kann ein Hinweis an den Fahrer ausgegeben werden, den Lenkwinkel nicht zu ändern.

An dem zweiten Umlenkpunkt 67 wird an den Fahrer die Anweisung ausgegeben, das Fahrzeug anzuhalten und einen Lenkeinschlag, vorzugsweise einen Volleinschlag, nach links vorzunehmen. In gleicher Weise wie an dem ersten Umlenkpunkt 65 wird überprüft, ob das Fahrzeug steht. Falls ja, werden die Bremseinrichtungen 32, 33 bzw. 34, 35 solange aktiviert, bis der gewünschte Lenkwinkel nach links von dem Fahrer eingestellt wurde. Nun wird der Befehl an den Fahrer ausgegeben, seine Fahrt mit dem aktuell eingeschlagenen Lenkwinkel fortzusetzen. Entsprechend dem Fahrweg 66 kann der Fahrer nun mit dem eingeschlagenen Lenkwinkel seine Fahrt fortsetzen. Ein Fahren des Fahrzeugs in dem Fall, dass der berechnete Lenkwinkel zum Einparken in die Parklücke an dem zweiten Umlenkpunkt 67 noch nicht eingestellt wurde, wird hierbei vermeiden.

Der Fahrer setzt nun das Fahrzeug bis zu dem dritten Umlenkpunkt 68 zurück. In gleicher Weise wird wieder eine Lenkanweisung ausgegeben, diesmal nun, das Lenkrad gerade zu stellen. Entsprechend werden die Bremseinrichtungen zum Festhalten des Fahrzeugs aktiviert und anschließend nach Erreichen des erforderlichen Lenkwinkels wieder gelöst. Der Fahrer kann nun das Fahrzeug noch ein Stück nach vorne fahren, um es geeignet in der Parklücke zu positionieren, ohne das erste Fahrzeug 62 zu behindern.

Für den Fall, dass sich der Fahrer an einem Umlenkpunkt dazu entscheidet, die Fahrt in die Parklücke nicht fortzusetzen, ist ein in der Figur 1 gezeigtes Bedienelement 36 vorgesehen, das über eine Datenschnittstelle 37 von dem Steuergerät 10 ausgelesen wird. Stellt das Steuergerät 10 eine Betätigung des Bedienelements 36 fest, so werden die Bremseinrichtungen 32, 33, 34, 35, insofern sie von dem Steuergerät 10 aktiviert worden sind, gelöst. Gegebenenfalls wird an den Fahrer eine akustische und/oder optische Warnung ausgegeben.

In einem weiteren Ausführungsbeispiel ist es auch möglich, dass das Fahrzeug zwar automatisch gebremst wird, dass ein Lösen der Bremseinrichtung aber eine Zustimmung des Fahrers bedarf. Wird der gewünschte Lenkwinkel eingestellt, so wird die Bremse gemäß dieser Ausführungsform erst dann gelöst, wenn der Fahrer beispielsweise zusätzlich das Gaspedal des Fahrzeugs betätigt oder einen Gang einkuppelt, indem er einen Druck auf das Kupplungspedal löst oder bei einem Automatikfahrzeug eine Fahrstufe einlegt. Eine Warnung, dass die Bremse gelöst wird, kann dennoch an den Fahrer ergänzend ausgegeben werden. Ist der vorgegebene Lenkwinkel noch nicht eingestellt, bleibt die Bremseinrichtung bevorzugt zunächst auch dann aktiviert, wenn der Fahrer einkuppelt oder das Gaspedal betätigt, so dass der Fahrer eine Rückmeldung infolge des wirkenden Bremswiderstands erhält. Erst bei einem Überschreiten eines vorgegebenen Kraftwertes wird in diesem Fall die Bremseinrichtung durch die Betätigung des Antriebs durch den Fahrer übersteuert und gelöst.

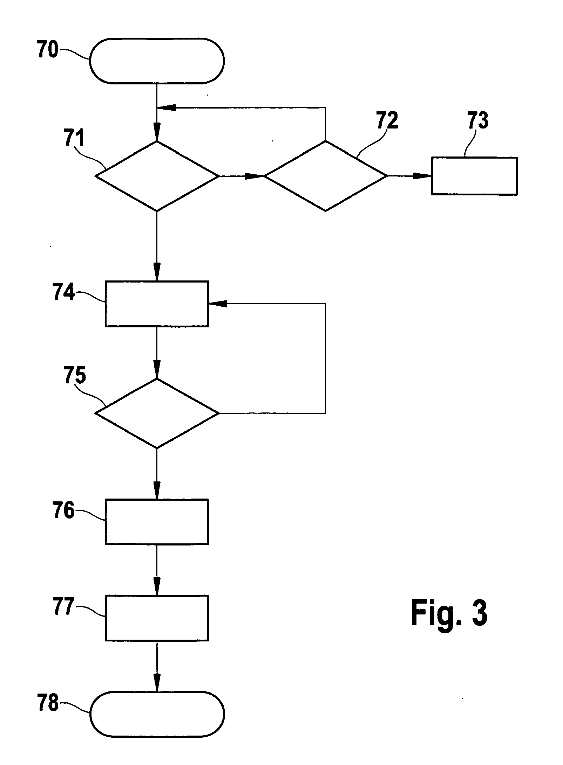

In der Figur 3 ist Verfahrensablauf des erfindungsgemäßen Verfahrens ausschnittsweise dargestellt. Ein Initialisierungsschritt 70 des Verfahrens wird dann aufgerufen, wenn eine Lenkung des Fahrzeugs nach Anforderung des Steuergerätes im Stand durchgeführt werden soll. In einem ersten Prüfschritt 71 wird überprüft, ob das Fahrzeug bereits steht. Ist dies nicht der Fall, so wird zu einem zweiten Prüfschritt 72 verzweigt, in dem geprüft wird, ob sich das Fahrzeug noch in einem entsprechenden Bereich befindet, in dem ein Lenkeinschlag erfolgreich durchgeführt werden kann. Ist dies der Fall, so wird zu dem ersten Prüfschritt 71 zurückverzweigt. Gegebenenfalls kann die Warnung an den Fahrer, das Fahrzeug anzuhalten, wiederholt werden. Hat das Fahrzeug einen geeigneten Anhaltebereich, z. B. eine Umgebung von 10 cm in beide Richtungen eines der Umlenkpunkte 65, 67, 68, bereits verlassen, so wird zu einem Warnschritt 73 verzweigt. In diesem Fall kann auch ein Vollausschlag der Lenkung nicht mehr ohne Korrektur der Position des Fahrzeugs zu dem gewünschten Ergebnis führten, da das Fahrzeug über einen geeigneten Anhaltebereich zum Durchführen eines Lenkeinschlags in die gewünschte Richtung bereits hinausgefahren ist. In dem Warnschritt 73 wird der Fahrer entweder dazu aufgefordert, das Fahrzeug in die entgegengesetzte Richtung zu bewegen, oder darüber informiert, dass ein weiteres Fahren in die Parklücke nicht möglich ist.

Wird in dem ersten Prüfschritt 71 festgestellt, dass das Fahrzeug steht, so wird zu einem Aktivierungsschritt 74 weiterverzweigt, in dem die Bremseinrichtung des Fahrzeugs aktiviert wird, so dass das Fahrzeug an der gewünschten Position gehalten wird. In einem dritten, anschließenden Prüfschritt 75 wird mittels einer Abfrage des Lenkwinkelsensors 8 über die Datenschnittstelle 26 überprüft, ob der von der Recheneinheit 11 berechnete Lenkwinkel eingestellt wurde. Ist dies nicht der Fall, so wird die Bremsung des Fahrzeugs fortgesetzt. Wurde dagegen der gewünschte Lenkwinkel erreicht, so wird zu einem Warnschritt 76 weiterverzweigt, in dem der Fahrer vor einem Lösen der Bremsen akustisch und/oder optisch gewarnt wird. In einem anschließenden Deaktivierungsschritt 77 wird die Bremseinrichtung gelöst, so dass sich das Fahrzeug wieder frei bewegen kann. Das weitere Einparkverfahren wird in einem Anschlussschritt 78 fortgesetzt.

## Patentansprüche

1. Steuergerät für eine Fahrunterstützung eines Fahrzeugs mit einer Datenschnittstelle (28) zur Abfrage von Sensoren zur Erfassung von Umgebungsdaten des Fahrzeugs, mit einer Datenschnittelle (26) zur Abfrage eines eingeschlagenen Lenkwinkels des Fahrzeugs, mit einer Recheneinheit (11) zur Ermittlung von Fahrhinweisen aus den von den Sensoren übermittelten Umgebungsdaten des Fahrzeugs und mit einer Datenschnittstelle (29) zur Ausgabe der Fahrhinweise, wobei die Fahrhinweise wenigstens einen Befehl umfassen, eine Lenkung des Fahrzeugs im Stand durchzuführen, und wobei eine Datenschnittstelle (30) zu einer derartigen Ansteuerung einer Bremseinrichtung des Fahrzeugs vorgesehen ist, dass das Fahrzeug während der im Stand durchzuführenden Lenkung so lange gebremst wird, bis ein vorgegebener Lenkwinkel eingestellt ist, **dadurch gekennzeichnet, dass** eine Schnittstelle (15) zur Abfrage von Bewegungssensoren des Fahrzeugs vorgesehen ist, wobei die Bremseinrichtung während der im Stand durchzuführenden Lenkung erst dann aktiviert wird, wenn die Abfrage der Bewegungssensoren ein Stehen der Räder des Fahrzeugs ermittelt.

2. Steuergerät nach Anspruch 1, **gekennzeichnet durch** eine Datenschnittstelle (37) zur Abfrage einer Eingabeeinrichtung zu einem Lösen der während der im Stand durchzuführenden Lenkung aktivierten Bremseinrichtung.

3. Steuergerät nach einem der vorhergehenden Ansprüche, **gekennzeichnet durch** eine Datenschnittelle (29) zur Ausgabe einer Warnung in dem Fall, dass die Bremseinrichtung gelöst wird.

4. Einparkvorrichtung für ein Fahrzeug mit einem Steuergerät (10) nach einem der vorhergehenden Ansprüche, mit Sensoren (2) zur Erfassung von Umgebungsdaten des Fahrzeugs, mit einer Ausgabeeinheit (13, 14) an den Fahrer des Fahrzeugs, mit einem Lenkwinkelsensor (8) und mit einer Ansteuerungseinheit (31) für eine elektronisch aktivierbare Bremseinrichtung (32, 33, 34, 35).

5. Verfahren zur Fahrunterstützung, insbesondere zur Einparkunterstützung für ein Fahrzeug, wobei Fahranweisungen ausgegeben werden, wobei die Fahranweisungen wenigstens eine Lenkanweisung für ein Lenken im Stand des Fahrzeugs umfassen, wobei während der im Stand durchzuführenden Lenkung eine Bremseinrichtung aktiviert wird, wobei der aktuell eingeschlagene Lenkwinkel erfasst wird und wobei die Bremseinrichtung erst dann gelöst wird, wenn während der im Stand durchzuführenden Lenkung ein vorgegebener Lenkwinkel erreicht wird, **dadurch gekennzeichnet, dass** Bewegungssensoren des Fahrzeugs vor einer Aktivierung der Bremseinrichtung bei einer im Stand durchzuführenden Lenkung abgefragt werden und dass eine Aktivierung der Bremseinrichtung nur bei einem stehenden Fahrzeug erfolgt.

6. Verfahren nach Anspruch 5, **dadurch gekennzeichnet, dass** eine Feststellbremse des Fahrzeugs während der im Stand durchzuführenden Lenkung aktiviert wird.

7. Verfahren nach einem der Ansprüche 5 oder 6, **dadurch gekennzeichnet, dass** eine Warnung bei einem Lösen der Bremseinrichtung ausgegeben wird.

## Claims

1. Control unit for a driver assistance system of a vehicle, having a data interface (28) for interrogating sensors for detecting surroundings data of the vehicle, having a data interface (26) for interrogating an adopted steering angle of the vehicle, having a computing unit (11) for determining driving information from the surroundings data of the vehicle which have been transmitted by the sensors, and having a data interface (29) for outputting the driving information, wherein the driving information comprises at least one command to carry out a steering operation of the vehicle in the stationary state, and wherein a data interface (30) is provided for actuating a brake device of the vehicle in such a way that the vehicle is braked during the steering operation which is to be carried out in the stationary state until a predefined steering angle is set, **characterized in that** an interface (15) is provided for interrogating movement sensors of the vehicle, wherein the brake device is not activated during the steering operation which is to be carried out in the stationary state until the interrogation of the movement sensors determines that the wheels of the vehicle are stationary.

2. Control unit according to Claim 1, **characterized by** a data interface (37) for interrogating an input device for releasing the brake device which is activated during the steering operation which is to be carried out in the stationary state.

3. Control unit according to either of the preceding claims, **characterized by** a data interface (29) for outputting a warning in the event of the brake device being released.

4. Parking device for a vehicle having a control unit (10) according to one of the preceding claims, having sensors (2) for detecting surroundings data of the vehicle, having an output unit (13, 14) for outputting to the driver of the vehicle, having a steering angle sensor (8) and having an actuation unit (31) for a brake device (32, 33, 34, 35) which can be activated electronically.

5. Method for providing driver assistance, in particular for providing parking assistance for a vehicle, wherein driving information is output, wherein the driving information comprises at least one steering information item for steering in the stationary state of the vehicle, wherein during the steering operation which is to be carried out in the stationary state, a brake device is activated, wherein the currently adopted steering angle is detected, and wherein the brake device is not released until a predefined steering angle is reached during the steering operation which is to be carried out in the stationary state, **characterized in that** movement sensors of the vehicle are interrogated before activation of the brake device during a steering operation which is to be carried out in the stationary state, and **in that** activation of the brake device takes place only when the vehicle is in the stationary state.

6. Method according to Claim 5, **characterized in that** a parking brake of the vehicle is activated during the steering operation which is to be carried out in the stationary state.

7. Method according to either of Claims 5 and 6, **characterized in that** a warning is output when the brake device is released.

## Revendications

1. Appareil de commande destiné à assister la conduite d'un véhicule et présentant
une interface de données (28) qui interroge des détecteurs qui détectent des données de l'environnement du véhicule,
une interface de données (26) qui interroge l'angle auquel la direction du véhicule est placée,
une unité de calcul (11) qui détermine des indications de conduite à partir des données de l'environnement du véhicule transmises par les détecteurs,
une interface de données (29) qui délivre les indications de conduite, les indications de conduite comprenant au moins un ordre d'action sur la direction du véhicule à l'arrêt,
une interface de données (30) prévue pour commander le système de freinage du véhicule de telle sorte que pendant l'action à exécuter sur la direction à l'arrêt, le véhicule soit freiné jusqu'à ce qu'un angle de direction prédéterminé ait été établi, **caractérisé en ce que**
une interface (15) qui interroge les détecteurs de déplacement du véhicule est prévue et
**en ce que** le dispositif de freinage n'est activé pendant l'action à exécuter sur la direction à l'arrêt que si l'interrogation des détecteurs de déplacement a déterminé que les roues du véhicule sont arrêtées.

2. Appareil de commande selon la revendication 1, **caractérisé par** une interface de données (37) qui interroge un dispositif d'introduction pour vérifier si une libération du dispositif de freinage activé pendant l'action à exécuter sur la direction à l'arrêt a été introduite.

3. Appareil de commande selon l'une des revendications précédentes, **caractérisé par** une interface de données (29) qui délivre un avertissement au cas où le dispositif de freinage est libéré.

4. Dispositif de stationnement pour un véhicule, présentant
un appareil de commande (10) selon l'une des revendications précédentes,
des détecteurs (2) qui détectent des données de l'environnement du véhicule,
une unité de sortie (13, 14) pour le conducteur du véhicule,
un détecteur (8) d'angle de direction et
une unité de commande (31) d'un dispositif de freinage (32, 33, 34, 35) activé électroniquement.

5. Procédé d'assistance à la conduite, en particulier d'assistance au stationnement d'un véhicule, dans lequel des indications de conduite sont délivrées,
les indications de conduite comprenant au moins une indication de changement de direction du véhicule à l'arrêt,
un dispositif de freinage étant activé pendant l'action à exécuter sur la direction à l'arrêt,
l'angle de direction effectivement établi étant détecté et
le dispositif de freinage n'étant libéré que si un angle de direction prédéterminé a été atteint pendant l'action exécutée sur la direction à l'arrêt, **caractérisé en ce que**
lors d'une action exécutée sur la direction à l'arrêt, les détecteurs du déplacement du véhicule sont interrogés avant l'activation du dispositif de freinage et
**en ce qu'**une activation du dispositif de freinage n'a lieu que si le véhicule est à l'arrêt.

6. Procédé selon la revendication 5, **caractérisé en ce qu'**un frein de stationnement du véhicule est activé pendant l'action exécutée sur la direction à l'arrêt.

7. Procédé selon l'une des revendications 5 ou 6, **caractérisé en ce qu'**un avertissement est délivré lors de la libération du dispositif de freinage.
